# EUROPÄISCHE PATENTANMELDUNG

(11) **EP 0 848 034 A2**
(43) Veröffentlichungstag der Anmeldung: **17.06.1998**
(21) Anmeldenummer: 97121190.9
(22) Anmeldetag: 03.12.1997
(51) Int. Cl.: C08K 11/00, C08L 77/06, C08G 69/26, C08G 69/36

(54) **Dekoriertes Halbzeug aus transparenten Polyamiden, Verfahren zu seiner Herstellung und seine Verwendung**

(30) Priorität: 12.12.1996 DE 19651714
(71) Anmelder: EMS-INVENTA AG, 8002 Zürich (CH)
(72) Erfinder: Dalla Torre, Hans, Dr., 7013 Domat/Ems (CH); Pabst, Michael, 7000 Cher (CH); Hala, Ralf, 88161 Lindenberg (DE); Lehr, Wolfgang, 7015 Tamins (CH)
(74) Vertreter: Pfenning, Meinig & Partner

(57) **Zusammenfassung**

Die Erfindung betrifft ein dekoriertes Halbzeug aus Kunststoff, das aus amorphem transparenten Polyamid mit einer Kerbschlagzähigkeit >4 besteht, in dem dreidimensional Dekoriermittel angeordnet ist.

## Beschreibung

Üblicherweise zeichnen sich Plastikmaterialien, welche in der Bijouterie, Kosmetik, Toiletrie, Lunetterie, in Wohnausstattungen oder in Sport- und Freizeitgerätschaften, in Verkleidungen von Transportmitteln usw. anzutreffen sind, durch ausgezeichnete Oberflächenbeschaffenheit, ausgesuchte Formen, durch verschiedenartige Farben oder Beschriftungen oder Dekorierungsmittel aus.

Was die Dekorierung betrifft, sind für bestimmte transparente Kunststoffprodukte eigene Techniken entwickelt worden, welche in gleicher Art und Qualität nicht auf alle transparenten Materialien ohne weiteres übertragbar sind, weil diese sich in ihren physikalischen Eigenschaften oft sehr stark unterscheiden.

So konnten bisher Brillengestelle mit dreidimensionalen Dekormustern ausschliesslich aus Cellulosederivaten, insbesondere Platten, aus Cellulose-Acetat durch Fräsen hergestellt werden.

Andererseits war dieses Material für den Thermotransferdruck von sublimierbaren Farben nicht geeignet, weil es häufig auf Grund von weichmachenden Zusätzen bei zu tiefen Temperaturen erweichte und der Sublimationstemperatur der eingesetzten Farben nicht standhielt. Bei dieser Technik sollten die transparenten Materialien nicht unter 130 °C erweichen, damit keine Formveränderung während des Sublimationsvorganges eintritt und eine minimale nötige Farbeindringtiefe erfolgen kann.

In EP 0 628 602 wird der Thermotransferdruck mit sublimierbaren Farbpigmenten bei Temperaturen von 150 bis 170 °C beschrieben und für eine Reihe von amorphen Copolyamiden beansprucht. Die Farbdekorierung erfolgt mit dieser Technik vorwiegend nur oberflächlich.

In EP 0 267 409 wird das Aufbringen von Farbschattierungen mit Tiefenwirkung auf Materialien aus Celluloseester bewerkstelligt, indem Granulate oder Stückgut zusammen mit Phthalat-Weichmachern in zwei Vorgängen mit Färbemittel gemischt und bei Temperaturen von 170 bis 200 °C und Druck über 10 bar in Formen verpresst wird. Dieses Verfahren ist umständlich und ist so nur für Cellulosederivate durchführbar, ausserdem können infolge Bruchgefahr keine dünnen Teile hergestellt werden oder diese höheren Temperaturen z.B. Sonneneinstrahlung ausgesetzt werden.

Eine häufig praktizierte dreidimensionale Farbdekorierung funktioniert nur bei Celluloseestern nach dem Blocksystem. Dabei werden Massenteile mit dem Dekorierungsmittel versetzt, mit Lösungsmittel, häufig Aceton, homogenisiert und aus dieser durch Erwärmung erhärteten, dekorierten Masse Halbzeuge gewonnen, indem man daraus Platten oder Blöcke schneidet, welche zu Fertigteilen z.B. gefräst werden. Es können aber aus diesen aufwendig hergestellten, dekorierten Blöcken infolge der Sprödigkeit keine dünnen Teile durch Fräsen hergestellt werden; ausserdem können daraus hergestellte Artikel nicht höheren Temperaturen ausgesetzt und Abfallteile nicht ökonomisch wiederverwertet werden. Schliesslich müssen solche Halbzeuge zur Abdampfung des Lösungsmittels lange gelagert werden.

In DE 41 15 829-A wird beispielsweise die Herstellung von Brillengestellen aus Celluloseacetat eingehend behandelt.

Gemäss JP 01 105 215-A werden gespritzte Brillenfassungen dadurch dekoriert, dass pigmentierte Beschichtungen aufgebracht werden, aus welchen dekorative Muster durch partielles Fräsen erzeugt werden. Die Dekorierung befindet sich nach dieser Technik aber lediglich nur an der Oberfläche ohne Tiefenwirkung.

US RE 26237-E handelt von zweifarbigen Brillengestellen, welche aus einem Celluloseacetatband ausgestanzt werden, welches aus zwei Strängen von verschieden gefärbten Schmelzen durch Coinjektion erhalten werden. Auch mit dieser Technik ist nur eine reduzierte Dekorierungsmöglichkeit erreichbar.

Ausgehend hiervon ist es die Aufgabe der vorliegenden Erfindung, Halbzeuge und ein Verfahren zu deren Herstellung mit dreidimensional enthaltenem Dekoriermittel vorzuschlagen, die problemlos zu Endprodukten mittels gängiger Techniken wie Fräsen weiterverarbeitet werden können.

Die Aufgabe wird durch die kennzeichnenden Merkmale des Anspruches 1 gelöst und hinsichtlich des Verfahrens durch die Merkmale des Anspruches 15. Die Verwendung der Halbzeuge ist in den Ansprüchen 17 bis 19 angegeben. Die Unteransprüche zeigen vorteilhafte Weiterbildungen auf.

Es wurde nun gefunden, dass aus bestimmten sehr zähen transparenten Polyamiden und Copolyamiden in der Masse dreidimensional dekorierte bzw. gefärbte Halbzeuge gefertigt werden können. Wesentlich ist, dass die Polyamide eine Kerbschlagzähigkeit >4 aufweisen. Nur wenn Polyamide eingesetzt werden, die eine derartige Kerbschlagzähigkeit besitzen, ist sichergestellt, dass durch eine nachträgliche spanabhebende Bearbeitung, insbesondere Fräsen, brauchbare Fertigteile hergestellt werden können. Kernpunkt der vorliegenden Erfindung ist somit die Auswahl von Polyamiden mit der vorstehend genannten Eigenschaft, um eine nachfolgende spanabhebende Bearbeitung zu gewährleisten. Die Polyamide sollten dabei bevorzugt eine Lösungsviskosität >1,40 und eine Glasumwandlungstemperatur TG von >100°C aufweisen. Es hat sich als besonders günstig erwiesen, die Dekorierungstechnik nach speziell entwickelten Verfahren des Plattenpressens, der Biinjektion, des Hinterspritzens und des Push-Pull-Verfahrens durchzuführen. Im Folgenden werden diese Techniken näher erläutert.

Beim "Plattenpressen" werden Pulver oder Granulate oder zerkleinerte Teile oder Fasern der transparenten Polyamide mit dem Dekorationsmittel gemischt oder nach beabsichtigten Mustern angeordnet, in eine Form gebracht und mittels Erwärmung und Druck zu einer einheitlich transparenten bunten oder durch und durch verzierten Platte oder zu einem beabsichtigten Halbzeug so verpresst, dass die Oberflächen völlig glatt sind und keine Konturen der Bestandteile des Polyamidgemisches erkennbar werden.

Die erforderlichen Temperaturen richten sich nach dem Erweichungspunkt der amorphen Polyamide und variieren zwischen 100° und 300 °C, häufig zwischen 120° und 280 °C. Die notwendigen Drücke liegen meistens zwischen 10 und 50 bar, die Pressdauer zwischen 5 und 20 Minuten, abhängig auch von der angewandten Temperatur und der Schichtdicke des Polyamidgemisches.

Das Dekorationsmittel kann aus farbigen Kunststoff-Granulaten, Farbpigmenten, Farbplättchen, Farbstreifen, Metallstaub, Metallfilter, gefärbten Glaskugeln, keramischen Stoffen, faserförmigen Stoffen, gefärbten Körnern und ähnlichen Dekorationsmitteln bestehen, so dass mehrfarbige, gesprenkelte, iridisierende, gestreifte, fluoreszierende, opaleszierende, metallisierende, mit verschiedenen Mustern versehene Halbzeuge entstehen. Zusätzliche Additive oder Stabilisatoren können ebenfalls dem Polyamidgemisch beigefügt werden.

Die benutzten Formen können einheitlich oder unterteilt sein und Hohlformen aller Art darstellen. Sie können rauhe oder polierte Innenwände besitzen, heizbar sein, mit Zwingen oder speziellen Verschlussmechanismen ausgerüstet sein.

Der Pressvorgang kann auch in einer automatisierten Weise mit Hilfe von Förderbändern und beheizbaren Pressen erfolgen.

Nach Erkalten der Form wird der Pressling aus der Form genommen und der weiteren Verarbeitung wie Fräsen, Schneiden, Stanzen, Feilen usw. zugeführt, wodurch dann Brillengestelle, Modeschmuck, Griffe, Toilettenartikel, Autoverkleidungen und andere Dekorartikel hergestellt werden. Häufig stellen derart geformte Gegenstände Unikate dar.

Eine weitere Möglichkeit zur Tiefendekorierung von Halbzeugen aus transparenten Polyamiden wird durch eine Art Biinjektion bewerkstelligt. Es werden dabei zwei oder mehrere unterschiedlich gefärbte oder dekorierte Schmelzeströme aus entsprechenden, separaten Spritzguss-Schnecken, gleichzeitig oder in zeitlichen Abständen über getrennte Einspritzkanäle in die Spritzgussform gedrückt. Die Schmelzen werden häufig aus den amorphen Polyamidgranulaten hergestellt, welche z.B. unterschiedlich gefärbt sind oder mit verschiedenen Dekorierungsmitteln gemischt sind. Die Masse-Temperaturen der Schmelzen liegen bei ca. 200 bis 300 °C. Die erzeugten Halbzeuge besitzen ebenfalls eine dreidimensionale Dekorierung, können Unikate sein und besitzen den Vorteil einer guten Reproduzierbarkeit und raschen Wiederholbarkeit.

Das Push-Pull-Verfahren ist ebenfalls eine Technik, welche zur Dekorierung von Halbzeugen verwendet werden kann.

Zwei oder mehrere mit Dekorierungsmittel versehene Schmelzeströme werden möglichst von gegenseitiger Richtung mit Hilfe von Spritzguss-Schnecken in die Kavitäten eines Werkzeuges gedrückt, in abwechselnder Folge und mit variablen Schmelzemengen und Drücken fast pulsierend. Dadurch werden Halbzeug-Mischfarben und beabsichtigte Dekoriereffekte erzielt, welche auch dreidimensional gestaltet werden können.

Die für die Dekorierung gemäss Erfindung zum Einsatz kommenden amorphen transparenten Polyamide werden allgemein hergestellt aus den Bausteinen: aliphatische, cycloaliphatische, araliphatischen Diamine und Dicarbonsäuren, wobei letztere teilweise durch aromatische Dicarbonsäuren ersetzt sein können. Insbesondere können sich die transparenten Polyamide zusätzlich aus Monomer-Bausteinen mit 11-C-Atomen, vornehmlich 12-C-Atomen zusammensetzen, welche sich von Lactamen oder ω-Aminocarbonsäuren ableiten.

Weiter bevorzugt sind transparente Polyamide, welche aus folgenden nicht ausschliesslichen monomeren Bausteinen aufgebaut sind: Laurinlactam oder ω-Aminododecansäure, Azelainsäure, Sebacinsäure, Dodecandisäure, Fettsäuren (C₁₈ - C₃₆, z.B. mit dem Handelsnamen Pripol), Cyclohexandicarbonsäuren, partieller oder gänzlicher Ersatz dieser aliphatischen Säuren durch Isophthalsäure, Terephthalsäure, Naphthalindicarbonsäure, Tributylisophthalsäure, Dekandiamin, Dodecandiamin, Nonandiamin, Hexamethylendiamin, Bis(4-aminocyclohexyl)-methan, Bis(3-methyl-4-aminocyclohexyl-)-methan, Bis(4-aminocyclohexyl)-propan, Bis-(amino)cyclohexan, Bis(aminomethyl)cyclohexan, Isophorondiamin, substituierte Pentamethylendiamine.

Beispiele für entsprechende transparente Polyamide sind in der EP 0 725 100 und EP 0 725 101 beschrieben. Auf den Offenbarungsgehalt wird deshalb ausdrücklich Bezug genommen.

Für die vorliegende Erfindung sind nur die Polyamide geeignet, die eine Kerbschlagzähigkeit >4 aufweisen. Nur so ist eine nachfolgende spanabhebende Bearbeitung, z.B. Fräsen, möglich, um möglichst dünnwandige Fertigteile herzustellen.

Die Polykondensation der erwähnten transparenten Polyamide erfolgt chargenweise in geeigneten Autoklaven oder kontinuierlich in sogenannten Reaktions-Extrudern.

Die folgenden Beispiele sollen die erwähnten Dekoriertechniken näher darstellen:

### Beispiel 1 (Folienherstellung und Transferdruck)

Aus dem transparenten Polyamidgranulat "Grilamid TR90" (Kerbschlagzähigkeit trocken (23 °C) 12 kJ/m², Viskosität ηrel (0,5 % m-Kresol) von 1,71 und T_{G} von 157,1 °C) der EMS CHEMIE AG, welches aus Bis(3-methyl-4-aminocyclohexyl)-methan und Dodecandisäure polykondensiert worden war, wurde auf einem Collin Extruder bei 280° Massetemperatur, 120 U/Min Schneckendrehzahl, 47 bar Massendruck mit 130 °C heissen Walzen und einem Abzug von 1,5 m/min eine 1 mm dicke transparente Folie hergestellt, welche zu A4-Folienblättern zerschnitten wurde.

Auf eine dieser Folien wurde ein Thermotransferpapier der Firma Argonauta mit Farbmustern gelegt, auf beiden Seiten mit zusätzlich einer Alu-Folie geschützt und mit einer polierten Platte von 2 kg beschwert. Diese Anordnung wurde 5 Minuten lang in einen Ofen von 150° gelegt. Nach Entfernung von Gewicht und Begleitfolien trug die Polyamidfolie die Farbmuster sauber und abriebfest auf ihrer Oberfläche.

### Beispiel 2 (Plattenpressen)

Transparentes Granulat der EMS CHEMIE AG "Grilamid TR55" (Kerbschlagzähigkeit trocken (23 °C) 5,8 kJ/m², Viskosität ηrel (0,5 % m-Kresol) von 1,55 und T_{G} von 160 °C) aus Laurinlactam, Isophthalsäure und Laromin C₂₆₀ wurde zusammen mit farbigen transparenten ca. 2 cm langen Polyamid-Bändchen mit gefärbten Granulaten vermischt, dazu wurde noch 0,3 % Irganox B 1171 zugemengt und das Ganze in eine vorbereitete quadratische Form 400 x 400 x 15 mm gefüllt. Abgedeckt wurde die Form mit einer passenden einseitig glatten Gewichtsplatte. Dieses Arrangement wurde in einen Vakuumofen gelegt, die Form zusätzlich mit einem 10 kg Gewicht Platte beschwert und der Ofen auf 220 °C erhitzt. Nach 30 Minuten Wärmebehandlung wurde die Form dem Ofen entnommen und abkühlen gelassen. Die entformte Platte besass eine glatte Oberfläche, war gut verfestigt und gleichmässig mit farbigen Bändchen und farbigen Granulaten durchsetzt. Die Platte wurde in 150 x 60 x 15 mm große rechteckige Teile zersägt, daraus wurden dreidimensional dekorierte feine Brillengestelle gefräst, welche ausgezeichnete Biegefestigkeit und gute Oberflächenbeschaffenheit aufweisen.

### Beispiel 3 (Coinjektion, Biinjektion)

Bei einer Arburg-Coinjektionsmaschine mit zwei separaten, im Winkel von 60° auf eine 80 °C heisse Form zulaufenden Schneckenanordnungen wurde jede Schnecke mit verschieden gefärbten und mit Messing-Pulver vermischtem Granulat aus Grilamid TR 90 (Kerbschlagzähigkeit trocken (23 °C) 12 kJ/m², Viskosität ηrel (0,5 % m-Kresol) von 1,71 und T_{G} von 157,1 °C) der EMS-CHEMIE AG beschickt. Bei ca. 285 °C und 60 bar Druck wurden abwechslungsweise kleine Portionen von Schmelze in die Form gedrückt. Der entformte Spritzling war eine 8 mm dicke, 12 mm lange und 6 mm breite Platte. Diese zeigte sich abwechselnd gefärbt, wobei einzelne Farbfronten in die nächste Farbzone eingedrungen waren.

Zersägte Teile zeigten eine dreidimensionale Durchmischung mit interessanten Verzierungseffekten.

### Beispiel 4

Der gleiche Granulat-Typ Grilamid TR 90 (Kerbschlagzähigkeit trocken (23 °C) 12 kJ/m², Viskosität ηrel (0,5 % m-Kresol) von 1,71 und T_{G} von 157,1 °C) der EMS-CHEMIE AG, wie in Beispiel 1 beschrieben, wurde mit 5 Gew.-% violett eingefärbten Glaskugeln von 2 mm Durchmesser innig gemischt und mittels einer Arburg-Spritzgussmaschine Typ Allrounder 320/210/750 zu Platten der Grösse 150/60/8 verspritzt. Von diesen wurden mit Hilfe einer Fräsmaschine Monoposto CMS dünnwandige Brillenrahmen gefräst, welche die violetten Dekorkugeln feinverteilt aufwiesen und welche extrem verbogen und geknickt werden konnten, ohne dass Materialbrüche auftraten, und welche nach der Verbiegung wieder die ursprüngliche Form des Brillenrahmens einnahmen, ohne dass Knickstellen sichtbar wurden.

## Patentansprüche

1. Dekoriertes Halbzeug aus Kunststoff,
dadurch **gekennzeichnet,**
dass es aus amorphem transparenten Polyamid mit einer Kerbschlagzähigkeit >4 besteht, in dem dreidimensional Dekoriermittel angeordnet ist.

2. Dekoriertes Halbzeug nach Anspruch 1,
dadurch gekennzeichnet, dass das Polyamid aus aliphatischen, cycloaliphatischen oder araliphatischen Diaminen und Dicarbonsäuren oder aromatischen Dicarbonsäuren oder/und Lactamen oder/- und ω-Aminocarbonsäuren hergestellt worden ist.

3. Dekoriertes Halbzeug nach Anspruch 1 oder 2,
dadurch gekennzeichnet, dass das Polyamid im wesentlichen aus alkylsubstituierten cycloaliphatischen Diaminen mit 14 bis 22 C-Atomen und unverzweigten aliphatischen Dicarbonsäuren mit 6 bis 36 A-Atomen, welche durch maximal 50 mol-% aromatische Dicarbonsäuren ersetzt sein können, oder aus unverzweigten aliphatischen Diaminen mit 9 bis 14 C-Atomen und aliphatischen, araliphatischen oder cycloaliphatischen Dicarbonsäuren mit 6 bis 36 C-Atomen, welche durch maximal 50 mol-% aromatische Dicarbonsäuren ersetzt sein können, aufgebaut ist.

4. Dekoriertes Halbzeug nach Anspruch 2 oder 3,
dadurch gekennzeichnet, dass als cycloaliphatische Diamine Bis-(amino)-cycloalkan-Verbindungen verwendet werden.

5. Dekoriertes Halbzeug nach mindestens einem der Ansprüche 2 bis 4,
dadurch gekennzeichnet, dass als cycloaliphatisches Diamin Bis(3-methyl-4-aminocyclohexyl)-methan, das mit bis zu 50 % durch andere Bis(amino)cycloalkan-Verbindungen ersetzt sein kann, verwendet wird.

6. Dekoriertes Halbzeug nach mindestens einem der Ansprüche 2 bis 5,
dadurch gekennzeichnet, dass als aliphatische Dicarbonsäuren solche mit 8 bis 12 C-Atomen verwendet werden können.

7. Dekoriertes Halbzeug nach mindestens einem der Ansprüche 2 bis 6,
dadurch gekennzeichnet, dass das cycloaliphatische Diamin Bis(3-methyl-4-aminocyclohexyl)-methan teilweise oder vollständig durch aliphatische Diamine mit C₆ - C₁₆ Atomen ersetzt sein kann.

8. Dekoriertes Halbzeug nach mindestens einem der Absprüche 2 bis 7,
dadurch gekennzeichnet, dass die amorphen transparenten Polyamide zusätzlich Ketteneinheiten mit C₆ - C₁₂ Atomen enthalten, welche sich von Lactamen oder ω-Aminocarbonsäuren oder Dicarbonsäuren ableiten.

9. Dekoriertes Halbzeug nach einem der Ansprüche 6 bis 8,
dadurch gekennzeichnet, dass als Dicarbonsäure Dodecandisäure, die mit bis zu 50 % durch aromatische Säuren ersetzt sein kann, verwendet wird.

10. Dekoriertes Halbzeug nach Anspruch 9,
dadurch gekennzeichnet, dass die Dodecandisäure teilweise oder vollständig durch Sebazinsäure, Azelainsäure oder eine aliphatische Dicarbonsäure von mehr als 12 C-Atomen ersetzt sein kann.

11. Dekoriertes Halbzeug nach mindestens einem der Ansprüche 2 bis 10,
dadurch gekennzeichnet, dass das Polyamid aus dem Polykondensationsprodukt von Dodecandisäure und Bis(3-methyl-4-aminocyclohexyl)-methan erhalten worden ist.

12. Dekoriertes Halbzeug nach mindestens einem der Ansprüche 1 bis 11,
dadurch gekennzeichnet, dass die amorphen transparenten Polyamide Blends oder Legierungen sind.

13. Dekoriertes Halbzeug nach mindestens einem der Ansprüche 1 bis 12,
dadurch gekennzeichnet, dass die Blends oder Legierungen Polyamid 11 oder Polyamid 12 und/oder weitere amorphe Polyamide enthalten.

14. Dekoriertes Halbzeug nach mindestens einem der Ansprüche 1 bis 13,
dadurch gekennzeichnet, dass das Dekoriermittel ausgewählt ist aus Farben, Pigmenten, Metallpulver, Flitter, Fäden, farbigen Granulaten, farbigen Fasern und Folien, Gläsern, keramischen Stoffen.

15. Verfahren zur Herstellung der dekorierten Halbzeuge nach mindestens einem der Ansprüche 1 bis 14,
dadurch gekennzeichnet, dass diese mittels Plattenpressen, Biinjektion, Coinjektion oder Push-Pull-Verfahren hergestellt werden.

16. Verfahren zur Herstellung nach Anspruch 15,
dadurch gekennzeichnet, dass die Halbzeuge durch spanabhebende Bearbeitung, insbesondere Fräsen, zu Fertigteilen verarbeitet werden.

17. Verwendung der dekorierten Halbzeuge nach mindestens einem der Ansprüche 1 bis 14,
dadurch gekennzeichnet, dass sie zu Verkleidungsteilen verarbeitet werden.

18. Verwendung der dekorierten Halbzeuge nach mindestens einem der Ansprüche 1 bis 14,
dadurch gekennzeichnet, dass sie zu Brillengestellen verarbeitet werden.

19. Verwendung der dekorierten Halbzeuge nach mindestens einem der Ansprüche 1 bis 14,
dadurch gekennzeichnet, dass sie zu modischen Artikeln verarbeitet werden.
